# EUROPEAN PATENT APPLICATION

(11) **EP 4 604 556 A1**
(43) Date of publication of application: **20.08.2025**
(21) Application number: 25158562.6
(22) Date of filing: 18.02.2025
(51) Int. Cl.: H04N 21/2187, G06Q 30/0601, H04N 21/254, H04N 21/478

(54) **LIVESTREAMING INFORMATION DISPLAY METHOD, AN APPARATUS, ELECTRONIC DEVICE, AND STORAGE MEDIUM**

(30) Priority: 18.02.2024 CN 202410180739
(71) Applicant: BEIJING YOUZHUJU NETWORK TECHNOLOGY CO. LTD., Beijing 101299 (CN)
(72) Inventor: LI, Chenglong, Beijing, 100028 (CN); LI, Xiaowei, Beijing, 100028 (CN); YU, Yang, Beijing, 100028 (CN)
(74) Representative: Isarpatent

(57) **Abstract**

The present disclosure relates to the field of computer technologies, and discloses a livestreaming information display method, an apparatus, an electronic device and a storage medium. The method comprises: displaying recommendation information on a current page, and acquiring a state of a current live streaming room on a page to be displayed; acquiring a product information description of the current live streaming room based on the state of the current live streaming room; and displaying the product information description on the page to be displayed before displaying livestreaming information of the current live streaming room on the page to be displayed. With the acquisition of the product information description, for the page to be displayed, through the display of the product information description before displaying the livestreaming information of the current live streaming room, the page to be displayed can be avoided from being blank or displaying no useful information.

## Description

### FIELD

The present disclosure relates to the field of computer technologies, and in particular, to a livestreaming information display method, an apparatus, an electronic device and a storage medium.

### BACKGROUND

In a live streaming scenario, the display of livestreaming information is a main concern. Due to the loading of the livestreaming information and other problems, the current page may display a blank page, which brings problems to the display of the livestreaming information.

### SUMMARY

In view of this, the present disclosure provides a livestreaming information display method, an apparatus, an electronic device and a storage medium to solve the problem of displaying livestreaming information.

In a first aspect, the present disclosure provides a livestreaming information display method, including:
displaying recommendation information on a current page, and acquiring a state of a current live streaming room on a page to be displayed;
acquiring a product information description of the current live streaming room based on the state of the current live streaming room; and
displaying the product information description on the page to be displayed before displaying livestreaming information of the current live streaming room on the page to be displayed.

In a second aspect, the present disclosure provides a livestreaming information display apparatus including:
a recommendation information displaying module, configured to display recommendation information on a current page, and acquire a state of a current live streaming room on a page to be displayed;
a product information description acquiring module, configured to acquire a product information description of the current live streaming room based on the state of the current live streaming room; and
a product information description display module, configured to display the product information description on the page to be displayed before displaying livestreaming information of the current live streaming room on the page to be displayed.

In a third aspect, the present disclosure provides an electronic device including: a memory and a processor, wherein the memory and the processor communicate with each other, the memory stores computer instructions, and the processor executes the computer instructions to perform the livestreaming information display method according to the first aspect or any implementation corresponding to the first aspect.

In a fourth aspect, the present disclosure provides a computer-readable storage medium storing computer instructions thereon, wherein the computer instructions are used for causing a computer to perform the livestreaming information display method according to the first aspect or any implementation corresponding to the first aspect.

In the livestreaming information display method provided by the embodiments of the present disclosure, the recommendation information is displayed on the current page, and for the page to be displayed to be displayed, the state of the current live streaming room in the page to be displayed is acquired. The state of the current live streaming room includes live streaming and live streaming that has been stopped, and the product information description of the current live streaming room is acquired for different states of the current live streaming room. That is, the acquired product information description corresponds to the state of the current live streaming room. The product information description is displayed on the page to be displayed before the livestreaming information of the current live streaming room is displayed on the page to be displayed. With the acquisition of the product information description, for the page to be displayed, before the livestreaming information of the current live streaming room is displayed, the display of the product information description can avoid the page to be displayed from being blank or displaying no useful information, thereby improving the display effect of the page to be displayed.

### BRIEF DESCRIPTION OF THE DRAWINGS

In order to more clearly illustrate the technical solutions in the specific embodiments of the present disclosure or in the prior art, the following will briefly introduce the drawings that need to be used in the description of the specific embodiments or the prior art. Obviously, the drawings in the following description are some embodiments of the present disclosure, and for those of ordinary skill in the art, other drawings can be acquired based on these drawings without creative efforts.
FIG. 1 is a schematic diagram of displaying livestreaming information in the related art;
FIG. 2 is a schematic diagram of displaying livestreaming information in the related art;
FIG. 3 is a schematic flowchart of a livestreaming information display method according to an embodiment of the present disclosure;
FIG. 4 is a schematic flowchart of another livestreaming information display method according to an embodiment of the present disclosure;
FIG. 5a-FIG. 5b are schematic diagrams of a current page and a page to be displayed according to an embodiment of the present disclosure;
FIG. 6 is a schematic diagram of displaying livestreaming information according to an embodiment of the present disclosure;
FIG. 7 is a schematic diagram of displaying livestreaming information according to an embodiment of the present disclosure;
FIG. 8 is a structural block diagram of a livestreaming information display apparatus according to an embodiment of the present disclosure; and
FIG. 9 is a schematic diagram of a hardware structure of an electronic device according to an embodiment of the present disclosure.

### DETAILED DESCRIPTION OF EMBODIMENTS

In order to make the objectives, technical solutions and advantages of the embodiments of the present disclosure clearer, the technical solutions in the embodiments of the present disclosure will be clearly and completely described below with reference to the drawings in the embodiments of the present disclosure. Apparently, the described embodiments are part of the embodiments of the present disclosure, rather than all of the embodiments. All other embodiments acquired by those of ordinary skill in the art based on the embodiments of the present disclosure without creative efforts fall within the protection scope of the present disclosure.

It can be understood that before using the technical solutions disclosed in the embodiments of the present disclosure, the user should be informed of the type, scope of use, use scenarios, etc. of the personal information involved in the present disclosure in an appropriate manner in accordance with relevant laws and regulations, and the authorization of the user should be acquired.

For example, in response to receiving an active request from a user, a prompt message is sent to the user to clearly inform the user that the operation requested to be performed will require the acquisition and use of personal information of the user. In this way, the user can independently choose whether to provide personal information to the software or hardware such as the electronic device, the application, the server, or the storage medium that performs the operations of the technical solutions of the present disclosure according to the prompt message.

As an optional but non-limiting implementation, the manner of sending the prompt message to the user in response to receiving the active request from the user may be, for example, a pop-up window, and the prompt message may be presented in text in the pop-up window. In addition, the pop-up window may also carry a selection control for the user to choose whether to "agree" or "disagree" to provide the personal information to the electronic device.

It can be understood that the above process of notifying and acquiring the user's authorization is only illustrative, and does not limit the implementation of the present disclosure. Other methods that meet relevant laws and regulations may also be applied to the implementation of the present disclosure.

It can be understood that the data involved in the technical solution (including but not limited to the data itself, the acquisition or use of the data) should comply with the requirements of corresponding laws, regulations and related provisions.

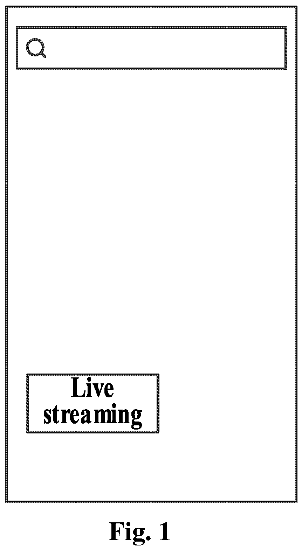

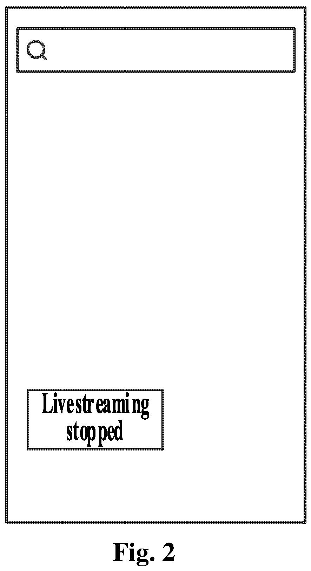

In the preview stream live streaming scenario, whether the live streaming pulling is successful directly affects whether the page can be displayed normally. In the related art, if the current page is a live streaming page but the live streaming stream has not been loaded, a blank page as shown in FIG. 1 is displayed on the current page. If the current page is a live streaming that has been stopped, a page as shown in FIG. 2 is displayed on the current page to give a prompt message of the live streaming that has been stopped. For the blank page or the page with the prompt message, no empty information is displayed, and the display duration of such pages is relatively short. Correspondingly, it is difficult to achieve the recommended effect of live streaming.

Based on this, in the livestreaming information display method provided by the embodiments of the present disclosure, the livestreaming state of the page to be displayed is known in advance, and the corresponding product information description is acquired according to different livestreaming states. The product information description is displayed on the page to be displayed before the livestreaming information of the current live streaming room is displayed on the page to be displayed. Before the livestreaming information of the current live streaming room is displayed, the display of the product information description can avoid the page to be displayed from being blank or displaying no useful information, thereby improving the display effect of the page to be displayed.

According to an embodiment of the present disclosure, an embodiment of a livestreaming information display method is provided. It should be noted that the steps shown in the flowcharts of the drawings may be executed in a computer system such as a set of computer-executable instructions, and although the logical order is shown in the flowcharts, in some cases, the steps shown or described may be executed in a different order than here.

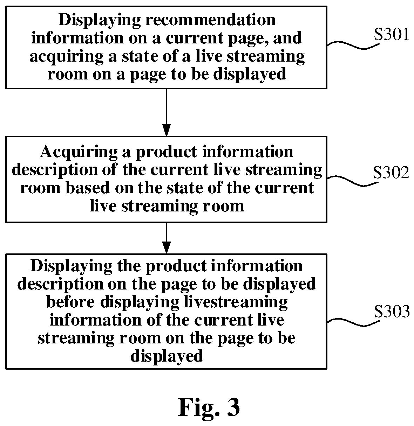

In the present embodiment, a livestreaming information display method is provided, which can be used for electronic devices, such as mobile terminals such as mobile phones, tablet computers, etc. FIG. 3 is a flowchart of a livestreaming information display method according to an embodiment of the present disclosure. As shown in FIG. 3, the process includes the following steps.

Step S301: displaying recommendation information on a current page, and acquiring a state of a current live streaming room on a page to be displayed.

In an interaction process of a target application, a home page of the target application includes a plurality of labels, and a page under a recommendation label is entered through interaction with the label. It should be noted that the display of the recommendation information in the target application is not limited to being under the recommendation label, and may also be under a live streaming label, etc., which is not specifically limited, and can be set according to actual requirements.

The current page is a page that is currently being displayed, and the page displays the recommendation information. The recommendation information may be short videos, products, etc., which are not specifically limited here. The page to be displayed is a page to be displayed, which is located after the current page. For the page to be displayed, it is used to display the livestreaming information of the current live streaming room. For example, the current page is a short video recommendation page, and the page to be displayed is a live streaming page.

When the terminal pulls a stream from the server of the target application, it pulls display information of a plurality of pages each time. For example, the display information of five pages is pulled each time. The timing of pulling is set according to actual requirements, including but not limited to timing or according to the display duration of the page on the terminal, etc.

In the pulled display information, the display content of each page is distinguished by an identifier. Different values of the same identifier represent different display content. For example, if the value of the identifier is 0, it means that the page is a short video page; if the value of the identifier is 1, it means that the page is a live streaming page.

The state of the current live streaming room in the page to be displayed can also be acquired from the pulled display information, and the corresponding identifier is adopted for the current live streaming room to mark the state of the live streaming room. If the value of the live streaming state identifier is 0, it means that the state of the current live streaming room is live streaming that has been stopped; if the value of the live streaming state identifier is 1, it means that the state of the current live streaming room is live streaming.

It should be noted that, in addition to the manner of identification shown above, other manners can also be used to distinguish the the display content pulled from the server of the target application and the live streaming state, for example, fields, etc. It is set according to actual requirements, and is not specifically limited here.

In some optional implementation modes, the acquisition timing of the live streaming state of the current live streaming room may be timing acquisition. For example, when the current page is displayed, a timer is started, and the acquisition of the live streaming state will be triggered at a set time; the live streaming state is acquired when the page sliding stops; the live streaming state is acquired when switching from the background to the foreground; the live streaming state is acquired when returning to the portrait video from the landscape full screen; or, the live streaming state is acquired N pages in advance, wherein the specific value of N is set according to actual requirements, for example, N=3 or N=5, etc. The acquisition timings described above are only some optional manners, but do not limit the protection scope of the present disclosure.

Step S302: acquiring a product information description of the current live streaming room based on the state of the current live streaming room.

For different states of the current live streaming room, the acquired product information descriptions are also different. The product information description includes a description of products involved in the current live streaming room, and a description of a store corresponding to the current live streaming room.

Since the products involved in the live streaming room are real-time, such as being put on the shelves, being taken off the shelves, or being sold out, etc., for the case where the state of the current live streaming room is live streaming, the acquired product information description is the products involved in the live streaming room. Correspondingly, for the case where the state of the current live streaming room is live streaming that has been stopped, the acquired product description is the description of the store corresponding to the current live streaming room.

It should be noted that the description of the products involved in the current live streaming room includes but is not limited to products that have been recommended, products that are being recommended, or products that are about to be recommended in the current live streaming room, etc. The description of the store corresponding to the current live streaming room includes the description of the products involved in the store. The difference between the two lies in that the description of the product may be only for some products involved in the current live streaming room, while the description of the store involves the description of the products involved in the store, and there is a certain difference between the two in terms of the number of products.

Step S303: displaying the product information description on the page to be displayed before displaying the livestreaming information of the current live streaming room on the page to be displayed.

Through interaction processing, the page to be displayed is the current page, and then the product information description is displayed before the livestreaming information of the current live streaming room is displayed on the page to be displayed. It should be noted that before displaying the livestreaming information of the current live streaming room, it means that the livestreaming information is not successfully pulled or there is no livestreaming information at present.

The product information description is displayed on the page to be displayed before the livestreaming information of the current live streaming room is displayed on the page to be displayed. Through interacting with the product information description, the display of a product details page can be triggered, or another product information description can be switched to, etc.

The product information description is displayed in the target region of the page to be displayed. Since the product information description is provided with an interaction function, and the page to be displayed is also provided with an interaction function, in order to distinguish the current interaction object, a corresponding interaction manner can be set. For example, interaction manner 1 corresponds to the product information description, and interaction manner 2 corresponds to the switching of the page to be displayed. The interaction manner may be an interaction gesture, an interaction region, etc., which is specifically set according to actual requirements, and is not specifically limited here.

In the livestreaming information display method provided by the present embodiment, the recommendation information is displayed on the current page, and for the page to be displayed to be displayed, the state of the current live streaming room in the page to be displayed is acquired. The state of the current live streaming room includes live streaming and live streaming that has been stopped, and the product information description of the current live streaming room is acquired for different states of the current live streaming room. That is, the acquired product information description corresponds to the state of the current live streaming room. The product information description is displayed on the page to be displayed before the livestreaming information of the current live streaming room is displayed on the page to be displayed. With the acquisition of the product information description, for the page to be displayed, before the livestreaming information of the current live streaming room is displayed, the display of the product information description can avoid the page to be displayed from being blank or displaying no useful information, thereby improving the display effect of the page to be displayed.

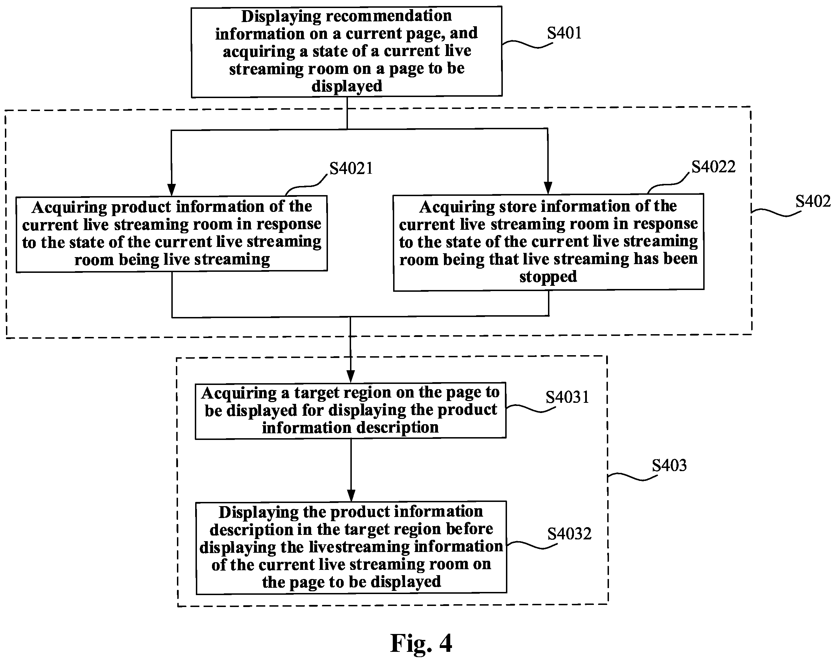

In the present embodiment, a livestreaming information display method is provided, which can be used for electronic devices, such as mobile terminals such as mobile phones, tablet computers, etc. FIG. 4 is a flowchart of a livestreaming information display method according to an embodiment of the present disclosure. As shown in FIG. 4, the process includes the following steps.

Step S401: displaying recommendation information on a current page, and acquiring a state of a current live streaming room on a page to be displayed. For details, please refer to step S301 of the embodiment shown in FIG. 3, which will not be repeated here.

Step S402: acquiring a product information description of the current live streaming room based on the state of the current live streaming room.

Specifically, the above step S402 includes:
Step S4021: acquiring product information of the current live streaming room in response to the state of the current live streaming room being live streaming.

The product information is used for characterizing a product information description of a related product in the current live streaming room.

In the case where the state of the current live streaming room is live streaming, the acquired product information is the product information involved in the current live streaming room. For example, the product being recommended in the live streaming room, or the product to be recommended, etc. In some optional implementations, the product information can be displayed in the form of a product card, or in the form of a floating window, etc., which can be set according to actual requirements.

Step S4022: acquiring store information of the current live streaming room in response to the state of the current live streaming room being that live streaming has been stopped.

The store information is used for characterizing a product information description in a store corresponding to the current live streaming room.

For the live streaming that has been stopped, the acquired information is the store information of the current live streaming room. The store information includes a product list provided by the store. Correspondingly, the store information can also be displayed in the form of a store card, or in the form of a floating window, etc.

The products in the store information can be distinguished according to categories, and the categories correspond to category labels one by one. The display of the product information of the corresponding category is switched to through interacting with the category label.

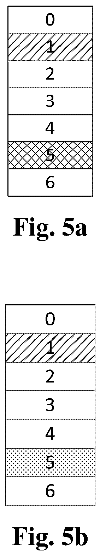

As shown above, the information of the page to be displayed is acquired in advance. As shown in FIG. 5a, the current page is page 1, then page 2-page 6 are pages to be displayed. Wherein, page 5 is a live streaming page, then page 5 is the page to be displayed including the current live streaming room. Each time when the display information of each page is pulled, the display content of the page is also acquired. If it is a live streaming page, the live streaming state is acquired, and correspondingly, the live streaming state of page 5 is acquired.

As shown in FIG. 5b, if the live streaming state of page 5 is live streaming that has been stopped, the store information of the current live streaming room in page 5 is acquired, and the store information is determined as the display information of page 5. If the display is switched to page 5 through interaction, the store information is displayed on page 5.

Step S403: displaying the product information description on the page to be displayed before displaying the livestreaming information of the current live streaming room on the page to be displayed.

Specifically, the above step S403 includes:
Step S4031: acquiring a target region on the page to be displayed for displaying the product information description.

The page to be displayed includes at least one target region, and the target region is used for displaying the product information description. The number of the target regions is set according to actual requirements, and is not specifically limited here.

The position and size of the target region may be default, or may be acquired after adjustment through interaction, etc.

In some optional implementation modes, the above step S4031 includes:
Step a1: acquiring an initial region on the page to be displayed for displaying the product information description.
Step a2: acquiring an adjustment instruction for the initial region, and determining the target region.

A default initial region is set in the page to be displayed, and the initial region can be used for displaying the product description information. Through interacting with the initial region, an adjustment instruction for the initial region is generated, and the target region is determined. The adjustment instruction includes but is not limited to a position adjustment instruction and a size adjustment instruction. Of course, it may also include a quantity adjustment instruction for the initial region, etc.

After the target region is determined, the product description information can be displayed in the target region. Further, the target region can be further adjusted, for example, the target region is switched to full screen display, etc. In the case of full screen display, if the switching of the page to be displayed is to be realized, the size of the target region can be restored to the size before full screen, and then the display is switched to other pages through interacting with the page to be displayed.

The initial region in the page to be displayed is default, and the adjustment of the initial region is realized through interacting with the page to be displayed to acquire the target region, thereby realizing the personalized display of the product information description.

Step S4032: displaying the product information description in the target region before displaying the livestreaming information of the current live streaming room on the page to be displayed.

After the target region is determined, if the display is switched to the page to be displayed, for the current live streaming room in live streaming, the livestreaming information of the current live streaming room may not be successfully pulled; and for the current live streaming room of live streaming that has been stopped, there is no useful information to be displayed. Based on this, the product information description is displayed in the determined target region before the livestreaming information of the current live streaming room is displayed on the page to be displayed.

In some optional implementation modes, the above step S4032 includes:
Step b1: displaying the product information in the target region in response to the state of the current live streaming room being live streaming and the livestreaming information of the current live streaming room being not loaded.
Step b2: displaying the store information in the target region in response to the state of the current live streaming room being that live streaming has been stopped.

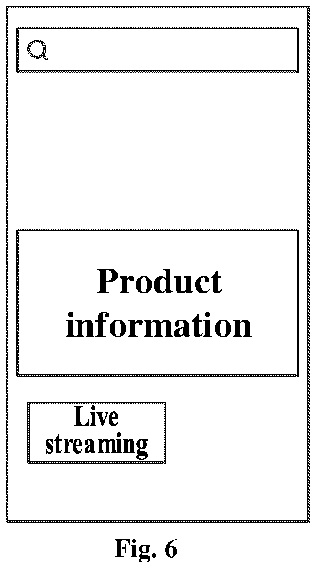

For the case where the current live streaming room is in live streaming and the livestreaming information is not loaded, the page as shown in FIG. 6 can be displayed. The product information is displayed in the target region of the page shown in FIG. 6, for example, the product to be recommended in the current live streaming room is displayed.

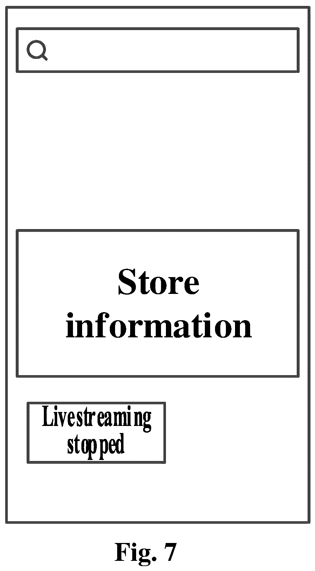

For the current live streaming room of live streaming that has been stopped, the page as shown in FIG. 7 can be displayed. The store information is displayed in the target region of the page shown in FIG. 7, for example, the product list of all products in the store corresponding to the current live streaming room.

For the case where the current live streaming room is in live streaming and the livestreaming information is not loaded, the product information is displayed in the target region of the page to be displayed, so as to avoid the page to be displayed from being blank; and for the live streaming that has been stopped, the store information is displayed in the target region, so as to avoid the page to be displayed from displaying invalid content.

In some optional implementation modes, the above livestreaming information display method further includes: displaying the livestreaming information on the page to be displayed in response to the state of the current live streaming room being live streaming and the livestreaming information of the current live streaming room being loaded.

In the above description, the display content of the livestreaming information of the current live streaming room in live streaming is not loaded. After the livestreaming information of the current live streaming room is loaded, the display of the livestreaming information can be directly switched to, or prompt information of the livestreaming information can be displayed first, and the corresponding information is displayed by acquiring the feedback content of the prompt information. If the feedback content is to remain in the product information description, the product information description continues to be displayed; if the feedback content is to switch to the livestreaming information, the display is switched to the livestreaming information.

For the case where the current live streaming room is in live streaming and the livestreaming information is loaded, the display is switched to the livestreaming information of the page to be displayed for display, which ensures the normal display of the livestreaming information of the current live streaming room.

In the livestreaming information display method provided by the present embodiment, since the products in the live streaming room are time-sensitive, based on this, for the live streaming room in live streaming, the acquired product information is the product information of the current live streaming room; and for the live streaming that has been stopped, the acquired information is the store information of the current live streaming room. For different states of the current live streaming room, different product information descriptions are acquired, which can ensure the reliability of the content displayed on the page to be displayed. The product information description is displayed in the target region of the page to be displayed, rather than in the entire page to be displayed, thereby ensuring that the interaction of the page to be displayed is not affected while displaying the product information description.

In some optional implementation modes, the above step S402 includes:
Step c1: acquiring livestreaming data corresponding to the page to be displayed.
Step c2: sending a first store request in response to the state of the current live streaming room being live streaming and the livestreaming data not comprising product information of the current live streaming room, wherein the first store request is used for characterizing a request for a product information description in a store corresponding to the current live streaming room.
Step c3: acquiring store information of the current live streaming room based on the first store request, wherein the store information is product description information corresponding to the live streaming.

The livestreaming data corresponding to the page to be displayed is pulled in advance, and the livestreaming data includes the display content, the live streaming state, and the livestreaming information of the page to be displayed, etc. Since the amount of data of the livestreaming information may be large, there may be a case where the livestreaming information has not been loaded when the page to be displayed is displayed.

In response to the state of the current live streaming room being live streaming, the product information of the current live streaming room is preferentially acquired from the livestreaming data. If the product information is not acquired, the sending of the first store request is triggered, so as to acquire the store information of the current live streaming room from the server of the target application. Based on this, the store information of the current live streaming room can be acquired based on the first store request.

Therefore, for the current live streaming room in live streaming, the product information is preferentially displayed; and if there is no product information, the store information corresponding to the current live streaming room is displayed.

In the case where there is no product information of the current live streaming room in the livestreaming data, the first store request is sent to acquire the livestreaming information of the current live streaming room, so as to avoid the situation of invalid display.

In some optional implementation modes, the above step S402 includes:
Step d1: sending a second store request in response to the state of the current live streaming room being that live streaming has been stopped, wherein the second store request is used for characterizing a request for a product information description in a store corresponding to the current live streaming room.
Step d2: acquiring product information of a product corresponding to the current live streaming room from the livestreaming data in response to the store information of the current live streaming room not being acquired based on the second store request, wherein the product information of the product corresponding to the current live streaming room is product description information corresponding to the live streaming that has been stopped.

For the current live streaming room of live streaming that has been stopped, the store information is preferentially acquired. Specifically, the second store request is sent to the server of the target application to acquire the feedback content of the second store request. In response to the store information of the current live streaming room not being acquired based on the second store request, the product information of the product corresponding to the current live streaming room is acquired from the acquired livestreaming data. In this case, the product information is displayed in the current live streaming room of live streaming that has been stopped.

Therefore, for the current live streaming room of live streaming that has been stopped, the store information is preferentially requested; and if the store information is not acquired, the product information corresponding to the current live streaming room is displayed.

For the live streaming that has been stopped, the second store request is preferentially sent to acquire the store information of the current live streaming room, and in the case that the store information is not acquired, the product information of the product corresponding to the current live streaming room is acquired from the livestreaming data, so as to avoid the problem of blank display.

As a specific application embodiment of the embodiments of the present disclosure, after a target application is started, a recommendation page is displayed through interaction with a recommendation label on a home page of the target application. Recommendation information is displayed on a current page, and display information of a page to be displayed is acquired. A live streaming state of a live streaming room is acquired for a live streaming page. Product information is acquired for a live streaming room in live streaming; and store information is acquired for a live streaming room of live streaming that has been stopped. In the case where the live streaming page is displayed, for the live streaming room in live streaming, if the livestreaming information is not pulled, product information is displayed in a target region of the page to be displayed; and for the live streaming room of live streaming that has been stopped, store information is displayed in the target region of the page to be displayed.

In the present embodiment, a livestreaming information display apparatus is further provided, and the apparatus is used to implement the above embodiments and preferred implementations, which will not be repeated. As used below, the term "module" may implement a combination of software and/or hardware with predetermined functions. Although the apparatus described in the following embodiments is preferably implemented in software, the implementation of hardware, or a combination of software and hardware, is also possible and contemplated.

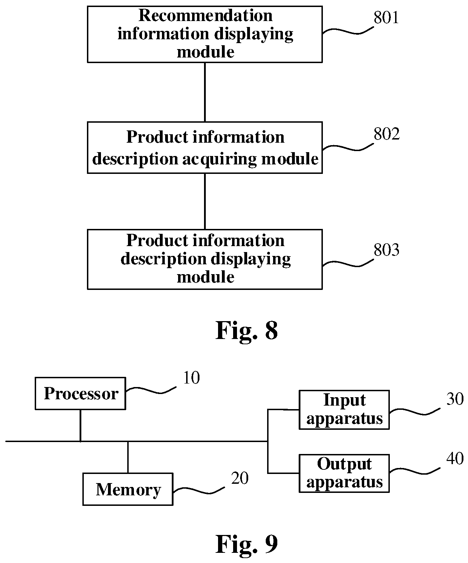

The present embodiment provides a livestreaming information display apparatus, as shown in FIG. 8, including:
a recommendation information displaying module 801, configured to display recommendation information on a current page, and acquire a state of a current live streaming room on a page to be displayed;
a product information description acquiring module 802, configured to acquire a product information description of the current live streaming room based on the state of the current live streaming room; and
a product information description display module 803, configured to display the product information description on the page to be displayed before displaying livestreaming information of the current live streaming room on the page to be displayed.

In some optional implementation modes, the product information description acquiring module 802 includes:
a product information acquiring unit, configured to acquire product information of the current live streaming room in response to the state of the current live streaming room being live streaming, wherein the product information is used for characterizing a product information description of a related product in the current live streaming room.
a store information acquiring unit, configured to acquire store information of the current live streaming room in response to the state of the current live streaming room being that live streaming has been stopped, wherein the store information is used for characterizing a product information description in a store corresponding to the current live streaming room.

In some optional implementation modes, the product information description display module 803 includes:
a target region acquiring unit, configured to acquire a target region on the page to be displayed for displaying the product information description; and
a product information description display unit, configured to display the product information description in the target region before displaying the livestreaming information of the current live streaming room on the page to be displayed.

In some optional implementation modes, the target region acquiring unit includes:
an initial region acquiring subunit, configured to acquire an initial region on the page to be displayed for displaying the product information description; and
an adjustment instruction acquiring subunit, configured to acquire an adjustment instruction for the initial region, and determine the target region.

In some optional implementation modes, the product information description display unit includes:
a product information display subunit, configured to display the product information in the target region in response to the state of the current live streaming room being live streaming and the livestreaming information of the current live streaming room being not loaded; and
a store information display subunit, configured to display the store information in the target region in response to the state of the current live streaming room being that live streaming has been stopped.

In some optional implementation modes, the livestreaming information display apparatus further includes:
a livestreaming information display module, configured to display the livestreaming information on the page to be displayed in response to the state of the current live streaming room being live streaming and the livestreaming information of the current live streaming room being loaded.

In some optional implementation modes, the product information description acquiring module 802 includes:
a livestreaming data acquiring unit, configured to acquire livestreaming data corresponding to the page to be displayed;
a first store request sending unit, configured to send a first store request in response to the state of the current live streaming room being live streaming and the livestreaming data does not include product information of the current live streaming room, wherein the first store request is used for characterizing a request for a product information description in a store corresponding to the current live streaming room; and
a store information acquiring unit, configured to acquire store information of the current live streaming room based on the first store request, wherein the store information is product description information corresponding to the live streaming.

In some optional implementation modes, the product information description acquiring module 802 includes:
a second store request sending unit, configured to send a second store request in response to the state of the current live streaming room being that live streaming has been stopped, wherein the second store request is used for characterizing a request for a product information description in a store corresponding to the current live streaming room.
a product information acquiring unit, configured to acquire product information of a product corresponding to the current live streaming room from the livestreaming data in response to the store information of the current live streaming room not being acquired based on the second store request, wherein the product information of the product corresponding to the current live streaming room is product description information corresponding to the live streaming that has been stopped.

The livestreaming information display apparatus in the present embodiment is presented in the form of functional units, wherein the units refer to ASIC (Application Specific Integrated Circuit) circuits, a processor and a memory that execute one or more software or fixed programs, and/or other devices that can provide the above functions.

Further functional descriptions of the above modules and units are the same as those of the corresponding embodiments described above, and will not be repeated here.

An embodiment of the present disclosure further provides an electronic device having the above livestreaming information display apparatus shown in FIG. 8.

Please refer to FIG. 9, which is a schematic structural diagram of an electronic device provided by an optional embodiment of the present disclosure. As shown in FIG. 9, the electronic device includes: one or more processors 10, a memory 20, and interfaces for connecting components, including a high-speed interface and a low-speed interface. The components communicate with each other using different buses and may be installed on a common motherboard or installed in other ways as required. The processor may process instructions executed within the electronic device, including instructions stored in or on the memory to display graphical information of a GUI on an external input/output apparatus (such as a display device coupled to the interface). In some optional implementations, multiple processors and/or multiple buses may be used with multiple memories and multiple memories if required. Similarly, multiple electronic devices may be connected, and each device provides part of necessary operations (for example, as a server array, a group of blade servers, or a multiprocessor system). In FIG. 9, one processor 10 is taken as an example.

The processor 10 may be a central processing unit, a network processor, or a combination thereof. The processor 10 may further include a hardware chip. The hardware chip may be an application specific integrated circuit, a programmable logic device, or a combination thereof. The programmable logic device may be a complex programmable logic device, a field programmable logic gate array, a general array logic, or any combination thereof.

The memory 20 stores instructions executable by at least one processor 10 to enable the at least one processor 10 to perform the method shown in the above embodiments.

The memory 20 may include a program storage area and a data storage area, wherein the program storage area may store an operating system, an application program required for at least one function; the data storage area may store data created according to the use of the electronic device, etc. In addition, the memory 20 may include a high-speed random access memory, and may also include a non-transient memory, such as at least one magnetic disk storage device, a flash memory device, or other non-transient solid-state storage devices. In some optional implementations, the memory 20 optionally includes a memory remotely set relative to the processor 10, and these remote memories may be connected to the electronic device through a network. Examples of the above network include but are not limited to the Internet, an intranet, a local area network, a mobile communication network, and a combination thereof.

The memory 20 may include a volatile memory, for example, a random access memory; the memory may also include a non-volatile memory, for example, a flash memory, a hard disk, or a solid-state disk; the memory 20 may also include a combination of the above types of memories.

The electronic device further includes an input apparatus 30 and an output apparatus 40. The processor 10, the memory 20, the input apparatus 30, and the output apparatus 40 may be connected through a bus or other means., and in FIG. 9, the connection through a bus is taken as an example.

The input apparatus 30 may receive input digital or character information, and generate key signal input related to user settings and function control of the electronic device, such as a touch screen, a keypad, a mouse, a track pad, a touch pad, an indicator rod, one or more mouse buttons, a trackball, a joystick, etc. The output apparatus 40 may include a display device, an auxiliary lighting device (for example, an LED), and a tactile feedback device (for example, a vibration motor), etc. The above display device includes but is not limited to a liquid crystal display, a light emitting diode, a display, and a plasma display. In some optional implementations, the display device may be a touch screen.

An embodiment of the present disclosure further provides a computer-readable storage medium, and the above method according to the embodiments of the present disclosure may be implemented in hardware, firmware, or may be implemented as computer code that can be recorded on the storage medium, or computer code that is originally stored in a remote storage medium or a non-transient machine-readable storage medium and downloaded through the network and will be stored in a local storage medium, so that the methods described herein can be stored in such software processing on a storage medium using a general computer, a dedicated processor, or programmable or dedicated hardware. The storage medium may be a magnetic disk, an optical disc, a read-only memory, a random access memory, a flash memory, a hard disk, or a solid-state disk, etc.; further, the storage medium may also include a combination of the above types of memories. It can be understood that the computer, the processor, the microprocessor controller, or the programmable hardware includes a storage component that can store or receive software or computer code, and when the software or computer code is accessed and executed by the computer, the processor, or the hardware, the methods shown in the above embodiments are implemented.

Although the embodiments of the present disclosure are described in combination with the drawings, those of ordinary skill in the art may make various modifications and variations without departing from the spirit and scope of the present disclosure, and such modifications and variations all fall within the protection scope defined by the appended claims.

## Claims

1. A livestreaming information display method, comprising:
displaying (S301, S401) recommendation information on a current page, and acquiring a state of a current live streaming room on a page to be displayed;
acquiring (S302) a product information description of the current live streaming room based on the state of the current live streaming room; and
displaying (S303, S403) the product information description on the page to be displayed before displaying livestreaming information of the current live streaming room on the page to be displayed.

2. The method according to claim 1, wherein acquiring (S301, S401) the product information description of the page to be displayed based on the state of the current live streaming room comprises:
acquiring (S4021) product information of the current live streaming room in response to the state of the current live streaming room being live streaming, wherein the product information is used for characterizing a product information description of a related product in the current live streaming room; and
acquiring (S4022) store information of the current live streaming room in response to the state of the current live streaming room being that live streaming has been stopped, wherein the store information is used for characterizing a product information description in a store corresponding to the current live streaming room.

3. The method according to claim 2, wherein displaying (S303, S403) the product information description on the page to be displayed before displaying the livestreaming information of the current live streaming room on the page to be displayed comprises:
acquiring (S4031) a target region on the page to be displayed for displaying the product information description; and
displaying (S4032) the product information description in the target region before displaying the livestreaming information of the current live streaming room on the page to be displayed.

4. The method according to claim 3, wherein acquiring (S4031) the target region on the page to be displayed for displaying the product information description comprises:
acquiring an initial region on the page to be displayed for displaying the product information description; and
acquiring an adjustment instruction for the initial region, and determining the target region.

5. The method according to claim 3, wherein displaying (S4032) the product information description in the target region before displaying the livestreaming information of the current live streaming room on the page to be displayed comprises:
displaying the product information in the target region in response to the state of the current live streaming room being live streaming and the livestreaming information of the current live streaming room being not loaded; and
displaying the store information in the target region in response to the state of the current live streaming room being that live streaming has been stopped.

6. The method according to claim 5, further comprising:
displaying the livestreaming information on the page to be displayed in response to the state of the current live streaming room being live streaming and the livestreaming information of the current live streaming room being loaded.

7. The method according to claim 1, wherein acquiring (S302) the product information description of the current live streaming room based on the state of the current live streaming room comprises:
acquiring livestreaming data corresponding to the page to be displayed;
sending a first store request in response to the state of the current live streaming room being live streaming and the livestreaming data not comprising product information of the current live streaming room, wherein the first store request is used for characterizing a request for a product information description in a store corresponding to the current live streaming room; and
acquiring store information of the current live streaming room based on the first store request, wherein the store information is product description information corresponding to the live streaming.

8. The method according to claim 7, wherein acquiring (S302) the product information description of the current live streaming room based on the state of the current live streaming room comprises:
sending a second store request in response to the state of the current live streaming room being that live streaming has been stopped, wherein the second store request is used for characterizing a request for a product information description in a store corresponding to the current live streaming room; and
acquiring product information of a product corresponding to the current live streaming room from the livestreaming data in response to the store information of the current live streaming room not being acquired based on the second store request, wherein the product information of the product corresponding to the current live streaming room is product description information corresponding to the live streaming that has been stopped.

9. A livestreaming information display apparatus, comprising:
a recommendation information displaying module (801), configured to display recommendation information on a current page, and acquire a state of a current live streaming room on a page to be displayed;
a product information description acquiring module (802), configured to acquire a product information description of the current live streaming room based on the state of the current live streaming room; and
a product information description display module (803), configured to display the product information description on the page to be displayed before displaying livestreaming information of the current live streaming room on the page to be displayed.

10. An electronic device, comprising:
a memory (20) and a processor (10), wherein the memory (20) and the processor (10) are communicatively connected with each other, the memory (20) stores computer instructions, and the processor (10) executes the computer instructions to perform the livestreaming information display method according to any of claims 1 to 8.

11. A computer-readable storage medium, wherein computer instructions are stored on the computer-readable storage medium, and the computer instructions are used for causing a computer to perform the livestreaming information display method according to any of claims 1 to 8.
